# EUROPEAN PATENT APPLICATION

(11) **EP 4 571 911 A1**
(43) Date of publication of application: **18.06.2025**
(21) Application number: 24217552.9
(22) Date of filing: 04.12.2024
(51) Int. Cl.: H01M 10/04, H01M 50/564

(54) **BATTERY CELL**

(30) Priority: 14.12.2023 KR 20230181757; 08.08.2024 KR 20240106137
(71) Applicant: SK On Co., Ltd., Seoul 03161 (KR)
(72) Inventor: PARK, Jong Hun, 34124 Daejeon (KR)
(74) Representative: Prüfer & Partner mbB Patentanwälte · Rechtsanwälte

(57) **Abstract**

A battery cell of the present disclosure may include: an electrode assembly including a first electrode and a second electrode having a different polarity from the first electrode; a can accommodating the electrode assembly in an internal accommodating space and including an upper portion having a through-hole formed therein; an electrode terminal inserted into the through-hole and electrically connected to the first electrode; and an insulating member including a disc-shaped cover portion covering an upper surface of the accommodating space and including an insertion hole corresponding to the through-hole, and an extension portion extending from the insertion hole toward the upper portion.

## Description

### BACKGROUND OF THE INVENTION

### 1. Field

The present disclosure relates to a battery cell and a manufacturing method of the same.

### 2. Description of the Related Art

A secondary battery is a battery that is made to convert electrical energy into chemical energy and store it so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharging. In addition, the opposite process of this phenomenon is referred to as charging.

When a cathode and an anode come into contact, heat or fire may occur. Therefore, research is actively being conducted to minimize the possibility of contact between a cathode and anode.

### SUMMARY OF THE INVENTION

A problem that the present disclosure aims to solve is to improve the stability of battery cells.

In addition, another problem that the present disclosure aims to solve is to improve production efficiency of battery cells.

In addition, the present disclosure can be widely applied in the field of electric vehicles, battery charging stations, and green technology, such solar power generation, and wind power generation using batteries.

In addition, the present disclosure can be used in eco-friendly electric vehicles, hybrid vehicles, etc. to prevent air pollution and climate change by suppressing greenhouse gas emissions.

The battery cell according to the present disclosure includes: an electrode assembly including a first electrode and a second electrode having a different polarity from the first electrode; a can accommodating the electrode assembly in an internal accommodating space and including an upper portion having a through-hole formed therein; an electrode terminal inserted into the through-hole and electrically connected to the first electrode; and an insulating member including a disc-shaped cover portion covering an upper surface of the accommodating space and including an insertion hole corresponding to the through-hole, and an extension portion extending from the insertion hole toward the upper portion.

The cover portion may extend along the radial direction around the insertion hole.

The cover portion may include a first surface facing the accommodating space and a second surface positioned on the opposite side of the first surface, and the second surface may be in contact with an upper portion inner surface facing the accommodating space in one surface of the upper portion of the can.

The can may further include a side portion bent from the upper portion, and the cover portion may be in contact with a side portion inner surface facing the inside of the side portion

The upper portion inner surface may be unexposed by the cover portion.

A part of the extension portion may be exposed to the outside of the can.

A part of the extension exposed to the outside of the through-hole may extend along the radial direction around the through-hole.

The cover portion may be formed integrally with the extension portion.

The insulating material may be in contact with each of the electrode terminal and the upper portion, and may be positioned between the electrode terminal and the upper portion to electrically insulate each other.

At least a part of the extending portion may be positioned inside the through-hole.

The extending portion may electrically insulate the electrode terminal from the upper portion.

The can may be electrically connected to the second electrode.

The battery cell further may further include a first electrode collector plate disposed on an upper surface of the electrode assembly and electrically connected to the first electrode, and the cover portion may electrically insulate the first electrode collector plate and the can.

The extension portion may include an extension support portion formed in parallel with the cover portion and an extension body portion extending upward from the extension support portion, and the extension body portion may be inserted into the insertion hole.

The extension support portion may be positioned under the cover portion.

One end of the extension support portion may be bent.

The electrode terminal may include a first region positioned in the accommodating space, a second region positioned outside the can, and a third region connecting the first region and the second region, and at least one region of the first region and the second region may extend along the radial direction around the third region.

The first region, the second region, and the third region may each be in contact with the insulating member.

A manufacturing method of a battery cell according to one embodiment of the present disclosure, as a manufacturing method of a battery cell includes an electrode assembly including a first electrode and a second electrode having a different polarity from the first electrode; a can accommodating the electrode assembly in an internal accommodating space and including an upper portion having a through-hole formed therein and; an electrode terminal inserted into the through-hole and electrically connected to the first electrode; and an insulating member including a disc-shaped cover portion covering an upper surface of the accommodating space and including an insertion hole corresponding to the through-hole, and an extension portion extending from the insertion hole toward the upper portion, includes: inserting the insulating member into the through-hole; and pressurizing each of the insulating member positioned in the accommodating space and the insulating member positioned outside the can.

The inserting the insulating member may include: bringing the cover portion into contact with an upper portion inner surface facing the accommodating space in one surface of the upper portion; and inserting the extension portion into the insertion hole.

According to one embodiment of the present disclosure, the stability of battery cells can be improved.

In addition, according to one embodiment of the present disclosure, the production efficiency of battery cells can be improved.

### BRIEF DESCRIPTION OF THE DRAWINGS

FIG. 1 illustrates a battery cell according to one embodiment of the present disclosure.
FIG. 2 illustrates a cross-section of a battery cell according to one embodiment of the present disclosure.
FIG. 3 illustrates an insulating member according to one embodiment of the present disclosure.
FIGS. 4 to 6 illustrate a manufacturing method of a battery cell according to one embodiment of the present disclosure.
FIGS. 7 and 8 illustrate the can and the electrode terminal of FIG. 6 viewed from the tope and the bottom, respectively.
FIG. 9 illustrates an insulating member according to another embodiment of the present disclosure.
FIGS. 10 to 12 illustrate a manufacturing method of a battery cell according to another embodiment of the present disclosure.
FIGS. 13 and 14 illustrate the can and the electrode terminal of FIG. 12 viewed from the top and the bottom, respectively.
FIG. 15 shows a flowchart of a manufacturing method of a battery cell according to another embodiment of the present disclosure.

### DETAILED DESCRIPTION

Herein, specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a cylindrical coordinate system with R and Z axes orthogonal to each other. Each axis direction (R-axis direction, Z-axis direction) refers to both directions in which each axis extends.

The R-axis direction and Z-axis direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

The terminology used in the present disclosure is for the purpose of describing specific embodiments only and is not intended to limit the scope of the claims. As used in the description of the embodiments and the appended claims, the singular forms are intended to include the plural forms as well, unless the context clearly dictates otherwise.

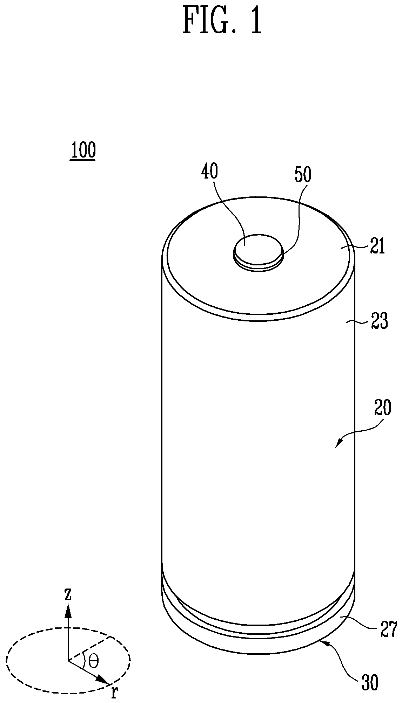

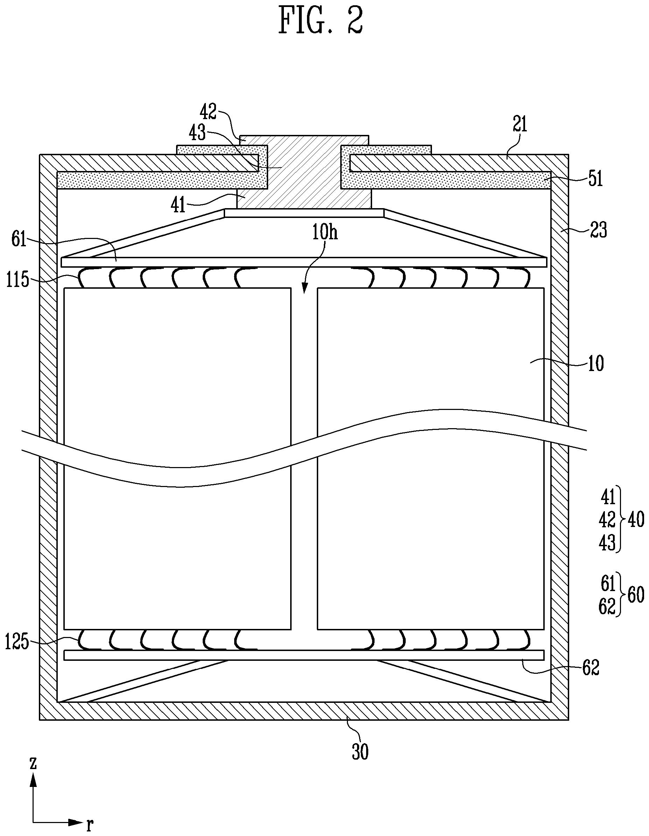

FIG. 1 illustrates a battery cell 100 according to one embodiment of the present disclosure, and FIG. 2 illustrates a cross-section of a battery cell 100 according to one embodiment of the present disclosure.

A battery cell 100 of the present disclosure includes an electrode assembly 10 including a first electrode 11 and a second electrode 12 having a different polarity from the first electrode 11; a can 20 accommodating the electrode assembly 10 in an internal accommodating space 25 and including an upper portion 21 having a through-hole 213 formed therein and; an electrode terminal 10 inserted into the through-hole 213 and electrically connected to the first electrode 11; and an insulating member 50 including a disc-shaped cover portion 51 covering an upper surface of the accommodating space 25 and including an insertion hole 511 corresponding to the through-hole 213, and an extension portion 53 extending from the insertion hole 511 toward the upper portion 21.

A battery cell 100 may be a secondary battery that may be used repeatedly by charging and discharging electric energy. For example, it may refer to a lithium secondary battery or a lithium ion battery, but is not limited thereto. As another example, it may refer to a solid-state battery.

Battery cells 100 may be classified into pouch-type secondary batteries, prismatic secondary batteries, or cylindrical secondary batteries depending on the shape. Referring to FIG. 1, in the present specification, a cylindrical secondary battery is illustrated as an example for convenience of explanation, but the present invention is not limited thereto.

A battery cell 100 may include an electrode assembly 10. An electrode assembly 10 may include a first electrode 11 and a second electrode 12. A first electrode 11 and a second electrode 12may have different polarities. In an embodiment, a first electrode 11 may be a cathode and a second electrode 12 may be an anode. In another embodiment, a first electrode 11 may be an anode and a second electrode 12 may be a cathode. An electrode assembly 10 may convert chemical energy into electrical energy through a redox reaction of a first electrode 11 and a second electrode 12.

An electrode assembly 10 may be formed by stacking a first electrode 11 and a second electrode 12. In an embodiment, a first electrode 11 and a second electrode 12 may be sequentially stacked, and then rolled from one end of the stacked first electrode 11 and second electrode 12 to the other end. An electrode assembly 10 may have the shape of a jelly roll including a center hole 10h. A center hole 10h may be formed at one end where a first electrode begins to be rolled.

Referring to FIG. 2, a center hole 10h may be formed at the center of an electrode assembly 10. A center hole 10h may extend along the height direction (e.g., Z-axis direction) of a can 20.

A battery cell 100 may further include a separator (not shown). A separator may be positioned between a first electrode 11 and a second electrode 12 to block contact between the first electrode 11 and the second electrode 12. The type of a separator is not particularly limited, but may include a porous polymer film. For example, a separator may include a porous polymer film or a porous non-woven fabric.

A battery cell 100 may further include an electrolyte. An electrolyte may be a medium that transmits ions or an electric current between a first electrode 11 and a second electrode 12. An electrolyte may be a non-aqueous electrolyte. An electrolyte may include a lithium salt and an organic solvent.

A battery cell 100 includes a can 20. A can 20 may form an accommodating space 25 therein. A can 20 may accommodate an electrode assembly 10 in an accommodating space 25. A can 20 may protect an electrode assembly 10 from external impact or heat. In an embodiment, a can 20 may be manufactured by a deep drawing method.

A can 20 may have the shape of a container with one surface open. In an embodiment, a can 20 may be formed in a cylindrical shape. A can 20 may include materials such as various metals such as iron and aluminum, alloys of thereof, plastics, ceramics, or carbon.

In an embodiment, a can 20 may include an upper portion 21. An upper portion 21 and a lower portion may be one of ends of a can 20 in the height direction (e.g., Z-axis direction).

A can 20 may further include a side portion 23. A side portion 23 may be formed by bending from an upper portion 21. A side portion 23 may connect one end and the other end of a can 20. Meanwhile, in the present specification, the height direction of a can 20 may refer to a direction in parallel with the Z-axis direction.

At least a part of an upper portion 21 may be formed as a flat surface with no height change in the horizontal direction (e.g., R-axis direction). The shape of an upper portion 21 when viewed along the height direction of a can 20 may be a circular shape. However, it is not limited thereto and may be transformed into an oval shape, a triangular shape, a rectangular shape, a polygonal shape, and the like.

A side portion 23 may extend along the height direction of a can 20 from an edge of an upper portion 21. In an embodiment, a side portion 23 and an upper portion 21 may be formed integrally or separately from each other.

In an embodiment, a can 20 may include a beading portion 27. A beading portion 27 may be formed on a side portion 23. A beading portion 27 may be a bent part of a side portion 23 facing an accommodating space 25 that the side portion 23 surrounds. A beading portion 27 may minimize the movement of an electrode assembly 10 within an accommodating space 25. Referring to FIG. 1, a beading portion 27 may be formed along an outer circumferential surface of a side portion 23. In another embodiment, a can 20 may not include a beading portion 27.

In an embodiment, a can 20 may include an opening portion (not shown) with one side open. An opening portion may be formed on an opposite side of an upper portion 21 in the height direction of a can 20. For example, when an upper portion 21 is formed on an upper end of a side portion 23, an opening portion may be formed on a lower end of the side portion 23.

An electrode assembly 10 may be inserted into an accommodating space 25 of a can 20 through an opening portion. In an embodiment, after an electrode assembly 10 is inserted into an accommodating space 25, a beading portion 27 may be formed in one region of a side portion 23 adjacent to an opening portion.

A can 20 includes a through-hole 213. An accommodating space 25 and the outside of a can 20 may communicate through a through-hole 213. The diameter of a through-hole 213 may be smaller than the diameter of a can 20.

An electrode terminal 40 may be inserted into a through-hole 213. An electrode terminal 40 may be inserted to close a through-hole 213. In an embodiment, after an electrode assembly 10 is inserted into the interior of a can 20, an electrolyte may be injected into the interior of the can 20. To prevent an electrolyte from being discharged from a through-hole 213, an electrode terminal 40 may close the through-hole 213.

A through-hole 213 may be formed in an upper portion 21 of a can 20. Referring to FIGS. 1 and 2, a through-hole 213 may be formed in an upper portion 21, and an electrode terminal 40 may be inserted into the through-hole 213. In an embodiment, a through-hole 213 may be formed in the center of an upper portion 21 of a can 20. A through-hole 213 may be formed in parallel with a center hole 10h of an electrode assembly 10 in the height direction.

A battery cell 100 may further include an electrode collector plate 60. An electrode collector plate 60 may be electrically connected to each of a first electrode 11 and a second electrode 12 of an electrode assembly 10. To this end, an electrode collector plate 60 may include a conductive material such as copper, gold, silver, and aluminum. In an embodiment, an electrode collector plate 60 may have a circular shape or a disc shape.

A battery cell 100 of the present disclosure may further include a first electrode collector plate 61 disposed on an upper surface of the electrode assembly 10 and electrically connected to the first electrode 11, and the cover portion 51 may electrically insulate the first electrode collector plate 61 and the can 20.

An electrode collector plate 60 may be disposed on an upper surface or a lower surface of an electrode assembly 10. In an embodiment, an electrode collector plate 60 may be disposed on each of an upper surface and a lower surface of an electrode assembly 10 in the height direction of a can 20.

An electrode collector plate 60 may include at least one of a first electrode collector plate 61 and a second electrode collector plate 62. A first electrode collector plate 61 may be positioned between an upper portion 21 and an electrode assembly 10. A second electrode collector plate 62 may be positioned between a cap plate 30 and an electrode assembly 10.

A first electrode collector plate 61 may be electrically connected to a first electrode 11. In addition, the first electrode collector plate 61 may be electrically connected to an electrode terminal 40. The electrode terminal 40 may be electrically connected to the first electrode 11. As a result, the electrode terminal 40 may have the same polarity as the polarity of the first electrode 11.

A second electrode collector plate 62 may be electrically connected to a second electrode 12. In addition, the second electrode collector plate 62 may be electrically connected to a can 20. The can 20 may be electrically connected to the second electrode 12. As a result, the can 20 may have the same polarity as the polarity of the second electrode 12.

Referring to FIG. 2, a first electrode lead 115 may be extended to one side of a first electrode 11 and connected to a first electrode current collector 61. Through this, the first electrode 11 may be electrically connected to the first electrode current collector 61. A second electrode lead 125 may be extended to one side of a second electrode 12 and connected to a second electrode current collector 62. Through this, the second electrode 12 may be electrically connected to the second electrode current collector 62.

A cap plate 30 may seal a can 20. In an embodiment, a cap plate 30 may be coupled to a can 20 after an electrode assembly 10 and an electrode collector 60 are accommodated in an accommodating space 25 of the can 20. In an embodiment, a cap plate 30 may be inserted into an opening portion and coupled to a can 20. In other words, a can 20 and a cap plate 30 may surround the outside of an electrode assembly 10 and an electrode collector 60.

In an embodiment, the shape of a cap plate 30 and a can 20 coupled to each other may have a cylindrical shape. However, this is only an example, and the shape of a cap plate 30 and a can 20 coupled to each other may be modified into various shapes such as a prismatic shape or a hexahedron.

In an embodiment, a cap plate 30 may be positioned on an opposite side of an upper portion 21. For example, when an upper portion 21 is formed on an upper end of a side portion 23, a cap plate 30 may be coupled to a lower end of the side portion 23.

Referring to FIG. 2, a second electrode collector plate 62 and a cap plate 30 of a battery cell 100 may be electrically connected. However, this is only an example, and an insulating gasket may be further included between a second electrode collector plate 62 and a cap plate 30. In this case, the second electrode collector plate 62 and the cap plate 30 may be electrically insulated. Without being limited thereto, a battery cell 100 of the present disclosure may have various structures in which a can 20 and a second electrode 12 are electrically connected.

Meanwhile, an electrode terminal 40 may be inserted into a through-hole 213. Since an electrode terminal 40 has the polarity of a first electrode 11, and a can 20 forming a through-hole 213 has the polarity of a second electrode 12, the electrode terminal 40 may be short-circuited when inserted into the through-hole 213. To prevent this, a battery cell 100 of the present disclosure includes an insulating member 50.

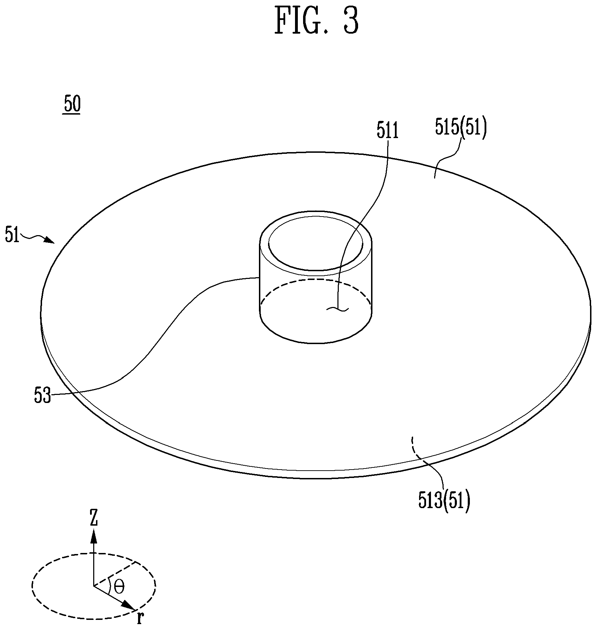

FIG. 3 illustrates an insulating member 50 according to one embodiment of the present disclosure.

An insulating member 50 includes a cover portion 51 and an extension portion 53. A cover portion 51 may cover an upper surface of an accommodating space 25. A cover portion 51 may be disposed at an upper end of an accommodating space 25 within the accommodating space 25. A cover portion 51 may cover an upper surface of an electrode assembly 10. Through this, a cover portion 51 may prevent electrical connection between a first electrode 11 and a can 20. In an embodiment, the diameter of a cover portion 51 may be larger than the diameter of an electrode assembly 10.

Referring to FIG. 2, the outer circumference of a cover portion may be positioned farther than the outer circumference of an electrode assembly 10 along the R-axis direction based on a center hole 10h.

An insulating member 50 may include an insulating material. For example, an insulating member 50 may include a polymer material having high insulating properties, such as polyethylene, polyvinyl chloride, natural rubbers, polyester, epoxy resins, melamine resins, phenol resins, polypropylene, polyethylene terephthalate, and polyimide. Without being limited thereto, an insulating member 50 may include a material having electrically insulating properties.

A cover portion 51 may include an insertion hole 511 corresponding to a through-hole 213. A cover portion 51 may be positioned at a lower portion of an upper portion 21 to cover an upper surface of an accommodating space 25. When a cover portion 51 is positioned at a lower portion of an upper portion 21, an insertion hole 511 may be positioned at a position corresponding to a through-hole 213.

An electrode terminal 40 may be inserted into an insertion hole 511. The diameter of an insertion hole 511 may be smaller than or equal to the diameter of a through-hole 213. In other words, an electrode terminal 40 may be inserted into a through-hole 213 after being inserted into an insertion hole 511.

A cover portion 51 may extend along the radial direction around an insertion hole 511. In an embodiment, an insertion hole 511 may be formed at the center of a cover portion 51. Referring to FIG. 3, a cover portion 51 may extend in the radial direction from an insertion hole 511 (For example, the radial direction may be in the R-axis direction. The R-axis may have an azimuth angle (θ) of 0° or more and 360° or less and may be changed.).

In an embodiment, the thickness of a cover portion 51 may be 0.3 mm to 2.0 mm, but is not limited thereto.

An extension portion 53 may extend from an insertion hole 511 toward an upper portion 21 (e.g., in the Z-axis direction). In an embodiment, an extension portion 53 may extend in the height direction of a can 20 from an edge formed along the outer circumference of an insertion hole 511. An extension portion 53 may be inserted into a through-hole 213. At least a part of an extension portion 53 may be positioned inside a through-hole 213.

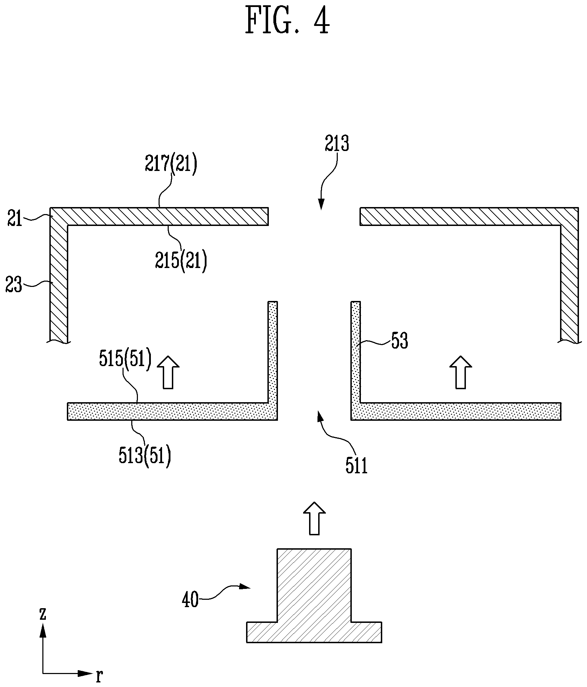

FIGS. 4 to 6 illustrate a manufacturing method of a battery cell 100 according to one embodiment of the present disclosure. FIGS. 4 to 6 describe a manufacturing method of a battery cell 100 focusing on a can 20, an insulating member 50, and an electrode terminal 40 and illustrate the method with some components omitted.

In an embodiment, an insulating member 50 may be inserted into an accommodating space 25 through an opening portion of a can 20. At this time, a through-hole 213 and an insertion hole 511 may be provided at corresponding positions. Thereafter, an electrode terminal 40 may pressurize the insulating member 50.

The insulating member 50 may be in contact with each of the electrode terminal 40 and the upper portion 21 and may be positioned between the electrode terminal 40 and the upper portion 21 to electrically insulate each other.

The cover portion 51 may include a first surface 513 facing the accommodating space 25 and a second surface 515 positioned on an opposite side the first surface 513, and the second surface 515 may be in contact with an upper portion inner surface 215 facing the accommodating space 25 in one surface of an upper portion 21 of the can 20.

Referring to FIG. 4, a cover portion 51 may be positioned so that a second surface 515 faces an inner surface of an upper portion 21. A first surface 513 may be in contact with an electrode terminal 40.

The can 20 may further include a side portion 23 bent from the upper portion 21, and the cover portion 51 may be in contact with a side portion inner surface 231 of the side portion (23) facing the inside. A side portion inner surface 231 may be one side surface of an accommodating space 25. A side portion inner surface 231 may be a surface facing an accommodating space 25 along the radial direction.

A side portion of a cover portion 51 may be in contact with a side portion inner surface 231. An edge of a side portion of a cover portion 51 may be in complete contact with a side portion inner surface 231. In an embodiment, a cover portion 51 may be fitted into a can 20. Contact between a first electrode lead 115 and an upper portion 21 of a can 20 may be prevented by a cover portion 51.

An upper portion inner surface 215 may be unexposed by a cover portion 51. After a cover portion 51 is disposed in an accommodating space 25, when an upper portion 21 is viewed from the accommodating space 25, an upper portion inner surface 215 may be unexposed by the cover portion 51. In other words, the entire area of the upper portion inner surface 215 may be covered by the cover portion 51.

When an upper portion inner surface 215 is partially exposed, a first electrode lead 115 will brought into contact with an inner surface of an upper portion 21. Through this, a first electrode 11 may be connected to an upper portion 21 of a can 20 and short-circuited.

In an embodiment, a can 20, an insulating member 50, and an electrode terminal 40 may be pressurized against each other to be in contact. When an electrode terminal 40 is inserted into an insertion hole 511, a cover portion 51 may be brought into close contact with an upper portion 21.

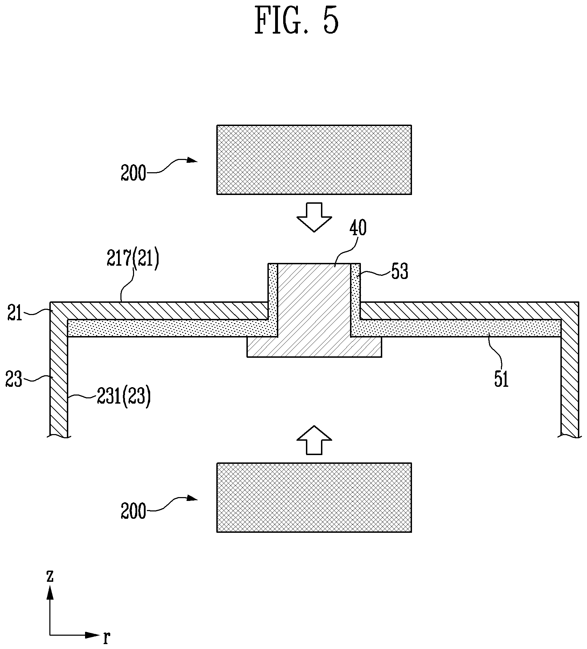

Thereafter, a pressurizing portion 200 may pressurize an electrode terminal 40. A pressurizing portion 200 may pressurize an electrode terminal 40 each in the inside an accommodating space 25 and from the outside a can 20. Referring to FIG. 5, a pressurizing portion 200 positioned inside an accommodating space 25 and a pressurizing portion 200 positioned outside a can 20 may pressurize an electrode terminal 40.

A part of the extension portion 53 may be exposed to the outside of the can 20. A part of an electrode terminal 40 and a part of a connecting portion may be exposed to the outside of a can 20 through a through-hole 213.

The shape of an electrode terminal 40 and an insulating member 50 may be changed by pressurization. A part of an electrode terminal 40 may be extended in the radial direction. A part of the extension portion 53 exposed to the outside of the through-hole 213 may be extended along the radial direction around the through-hole 213. This is because when a pressurizing portion 200 pressurizes an electrode terminal 40, it pressurizes an extension portion 53.

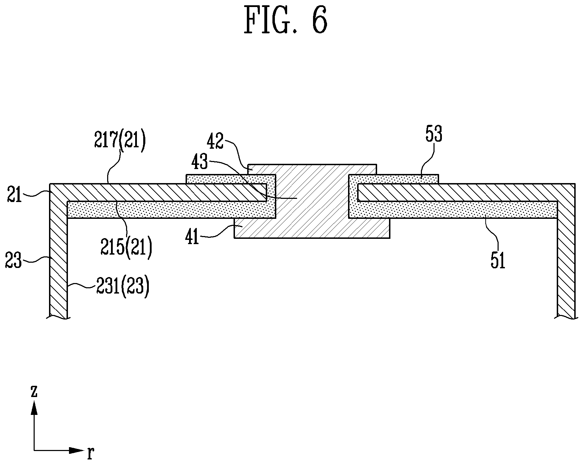

In addition, a cover portion 51 may be formed in parallel with a part of an extension portion 53 exposed to the outside of a through-hole 213. Referring to FIG. 6, a cover portion 51 and a part of an extension portion 53 may be formed to be parallel along the R-axis direction.

Through this structure, an insulating member 50 may be prevented from being separated from a through-hole 213. Even when the outer circumference of a cover portion 51 facing a side portion inner surface 231 is separated from an upper portion side surface 215, the cover portion 51 may be prevented from being completely separated from an upper portion 21 of a can 20 because an extension portion 53 is positioned outside an accommodating space 25.

The extension portion 53 may electrically insulate the electrode terminal 40 from the upper portion 21. Since an extension portion 53 and an electrode terminal 40 are each extended along the radial direction, contact between an electrode terminal 40 and an upper portion outer surface 217, which is an opposite surface of an upper portion inner surface 215, may be prevented. In other words, since an extension portion 53 is positioned between an electrode terminal 40 and an upper portion 21 of a can 20, contact between an electrode terminal 40 and an upper portion 21 of a can 20 may be prevented.

Referring to FIGS. 5 and 6, one end of an extension portion 53 may be extended in the R-axis direction. In addition, one end of an electrode terminal 40 may be extended in the R-axis direction. One end of an extended extension portion 53 may be disposed between one end of an extended electrode terminal 40 and an upper end 21 of a can 20.

The cover portion 51 may be formed integrally with the extension portion 53. Through this, the possibility of contact between an electrode terminal 40 and an upper portion 21 may be minimized. In addition, since the manufacturing method of a battery cell 100 can be simplified, the manufacturing efficiency can be improved.

The electrode terminal 40 may include a first region 41 positioned in the accommodating space 25, a second region 42 positioned outside the can 20, and a third region 43 connecting the first region 41 and the second region 42, and at least one region of the first region 41 and the second region 42 may extend along the radial direction around the third region 43.

Referring to FIG. 6, a part of an electrode terminal 40 may be positioned in an accommodating space 25, and another part may be positioned outside a can 20. In addition, an electrode terminal 40 positioned in an accommodating space 25 and an electrode terminal 40 positioned outside a can 20 may be connected to each other. Each may be a first region 41, a second region 42, and a third region 43 of an electrode terminal 40.

In an embodiment, an electrode terminal 40 may include a first region 41, a third region 43, and a second region 42 sequentially (or in the reverse direction) disposed along the height direction of a can 20.

At least one region of a first region 41 and a second region 42 may extend along the radial direction around a third region 43.

In an embodiment, when a first region 41 is extended, the diameter of an extended first region 41 may be larger than the diameter of a through-hole 213. When a second region 42 is extended, the diameter of the extended second region 42 may be larger than the diameter of a through-hole 213. Through this structure, an electrode terminal 40 may not be easily separated from a through-hole 213 after being inserted into the through-hole 213.

The first region 41, the second region 42, and the third region 43 may each be in contact with the insulating member 50. An insulating member 50 may be in contact with each of a part of an electrode terminal positioned in an accommodating space 25, a part of an electrode terminal positioned outside a can 20, and a part of an electrode terminal 40 connecting each other. Through this, an insulating member 50 may avoid contact with an electrode terminal 40 and an upper portion 21 of a can (20.

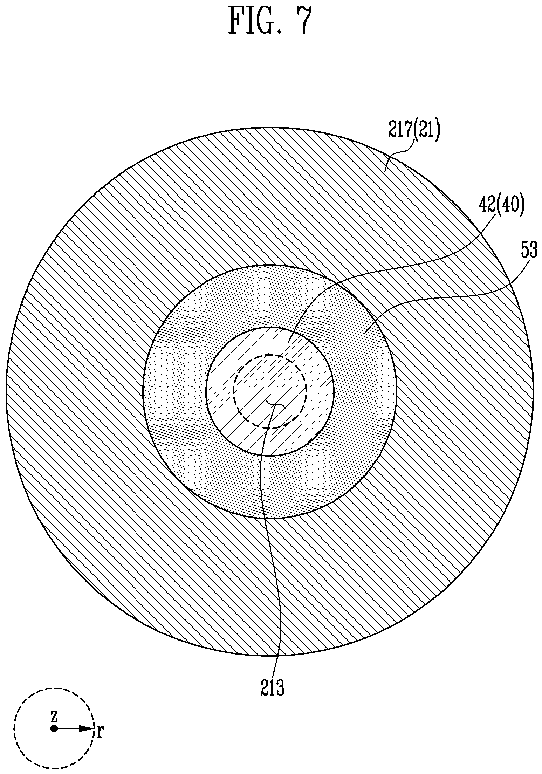

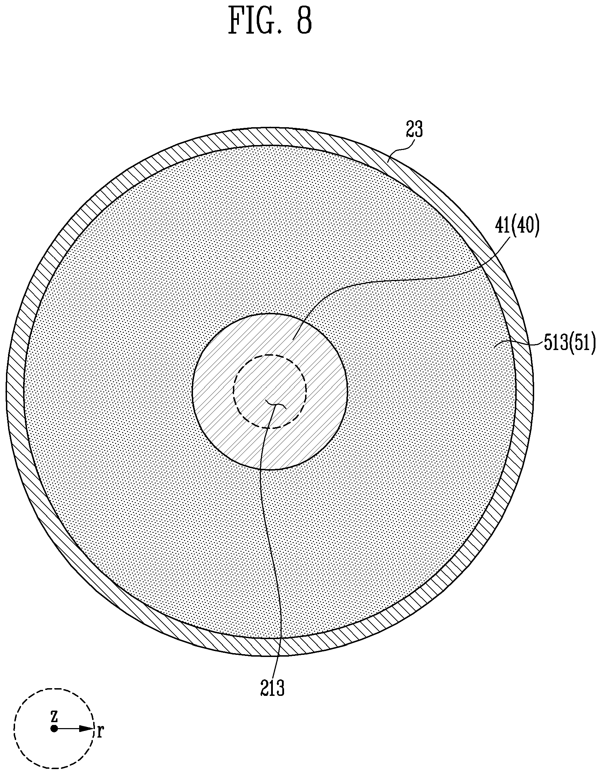

FIGS. 7 and 8 illustrate the can and the electrode terminal of FIG. 6 viewed from the top and the bottom, respectively. Specifically, FIG. 7 illustrates a view from the upper portion (Z-axis direction) of a can, and FIG. 8 illustrates a view from the bottom (Z-axis direction) of the can.

Referring to FIG. 7, an extension portion 53 may be extended in the radial direction (e.g., in the R-axis direction) based on a through-hole 213. In addition, an electrode terminal 40 may be extended in the radial direction based on a through-hole 213. At this time, the outer circumference of an extension portion 53 may be positioned farther away from the through-hole 213 along the radial direction compared to the outer circumference of the electrode terminal 40. Through this, an extension portion 53 may prevent contact between an electrode terminal 40 and an upper portion 21 of a can 20.

Referring to FIG. 8, a cover portion 51 may be extended in the radial direction (e.g., in the R-axis direction) based on a through-hole 213. The outer circumference of a cover portion 51 may be in contact with a side portion 23 of a can 20. Through this, a cover portion 51 may cover an upper portion inner surface 215 of a can 20, and electrical connection between a first electrode 11 and an upper portion 21 of a can 20 may be prevented.

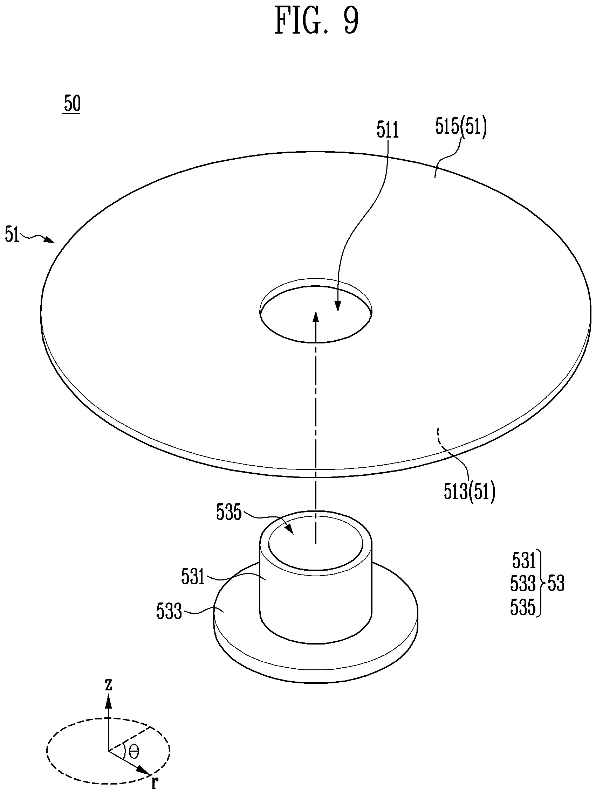

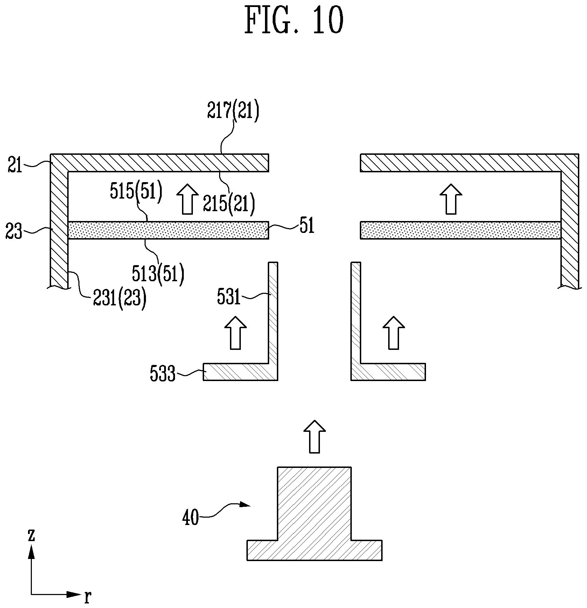

FIG. 9 illustrates an insulating member 50 according to another embodiment of the present disclosure, and FIGS. 10 to 12 illustrate a manufacturing method of a battery cell 100 according to another embodiment of the present disclosure.

According to another embodiment of the present disclosure, a cover portion 51 and an extension portion 53 may be manufactured separately. The extension portion 53 may be inserted into the insertion hole 511. Referring to FIG. 9, a cover portion 51 may be formed in a disk shape.

The extension portion 53 may include an extension support portion 533 formed in parallel with a cover portion 51 and an extension body portion 531 extending upward from the extension support portion 533, and the extension body portion 531 may be inserted into the insertion hole 511.

In an embodiment, an extension support portion 533 may be formed as a disc, and an extension body portion 531 may be formed as a cylinder.

An extension body portion 531 may be extended upwardly (e.g., in the Z-axis direction) from an extension support portion 533. The diameter of an extension body portion 531 may be smaller than or equal to the diameter of an extension support portion 533. Referring to FIG. 9, an extension body portion 531 may be inserted into an insertion hole 511 of a cover portion 51. To this end, the diameter of an extension body portion 531 may be smaller than the diameter of an insertion hole 511.

An extension body portion 531 may include an extension hole 535. An extension hole 535 may be provided as a hollow inside an extension body portion 531. An electrode terminal 40 may be inserted into an extension hole 535.

In an embodiment, after inserting a cover portion 51 into an accommodating space 25, an extension portion 53 may be inserted into an insertion hole 511. Thereafter, an electrode terminal 40 may be inserted into an extension hole 535. An electrode terminal 40 may pass through an extension hole 535, an insertion hole 511, and a through-hole 213.

After a cover portion 51, an extension portion 53, and an electrode terminal 40 are inserted, the electrode terminal 40 may be pressurized to bring an upper portion 21 of a can 20, a cover portion 51, an extension portion 53, and an electrode terminal 40 to close contact.

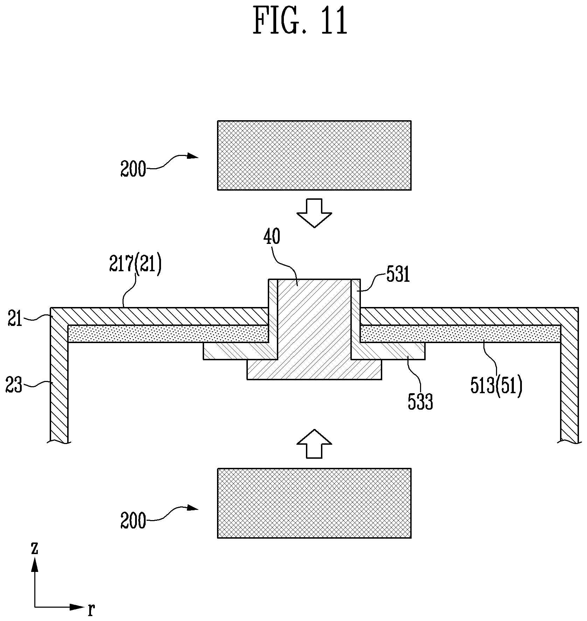

Referring to FIGS. 10 and 11, a second surface 515 of a cover portion 51 may be in contact with an upper portion inner surface 215, and a first surface 513 of the cover portion 51 may be in contact with an extension portion 53. The extension support portion 533 may be positioned at a lower portion of the cover portion 51. An extension support portion 533 may be in contact with a first surface 513 of a cover portion.

Thereafter, a pressurizing portion 200 may pressurize an electrode terminal 40. As described above, a pressurizing portion 200 may be provided each inside an accommodating space 25 and outside a can 20. Each of a pressurizing portion 200 positioned inside an accommodating space 25 and a pressurizing portion 200 positioned outside a can 20 may pressurize an electrode terminal 40. An electrode terminal 40 and an extension portion 53 may be extended along the radial direction by a pressurizing portion 200.

In an embodiment, one end of an extension body portion 531 may be bent. One end of a bent extension body portion 531 may be extended along the radial direction.

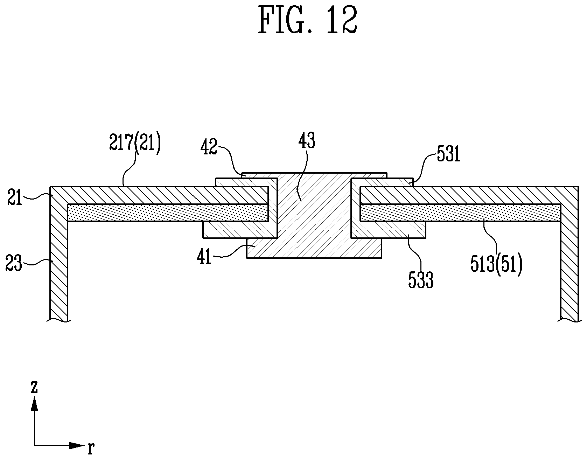

Referring to FIG. 12, a cover portion 51 and an extension portion 53 may be positioned between an electrode terminal 40 and an upper portion 21 of a can 20. More specifically, a part of an extension body portion 531 may be positioned between a second region 42 of an electrode terminal 40 and an upper portion 21 of a can 20. Through this, electrical connection between an electrode terminal 40 and a can 20 may be prevented.

A part of a cover portion 51 may be positioned between the extension support portion 533 and an upper portion 21 of the can. Through this structure, damage to a cover portion 51 may be prevented. In other words, even when a cover portion 51 is pressurized, a second surface 515 of the cover portion 51 is in even contact with an upper portion inner surface 215, so that the possibility that tearing or cutting due to the pressurization may happen may be minimized. Furthermore, since no empty space is formed between a cover portion 51 and an upper portion 21, the energy density of a battery cell can be improved.

When a cover portion 51 is separated from an upper portion 21, an electrolyte may be positioned in the space formed by the separation. In addition, the contact force between the cover portion 51 and the upper portion 21 may be reduced, and the electrolyte may easily leak out of a can 20.

In addition, a cover portion 51 and an extension portion 53 of the present disclosure may have high structural stability. Referring to FIG. 12, one end of a cover portion 51 positioned adjacent to an insertion hole 511 may be supported by an extension support portion 533.

An extension portion 53 has one end positioned outside a can 20 and the other end positioned in an accommodating space 25, so that even when the other end is subjected to a downward pressure, the extension portion may be supported by the one end positioned outside the can 20. In an embodiment, an extension body portion 531 may be positioned outside a can 20, and an extension support portion 533 may be positioned in an accommodating space.

Even when one end of a cover portion 51 moves downward (for example, in the Z-axis direction), the cover portion may be supported by an extension support portion 533, and the cover portion 51 may be unseparated from an upper portion 21 of a cap.

In addition, even when a cover portion 51 and an extension portion 53 are not formed integrally as described above, structural stability can be improved. Since one end of an extension portion 53 may be bent and stably fixed to the outside of a through-hole 213, the movement may be limited even when a cover portion 51 moves downward.

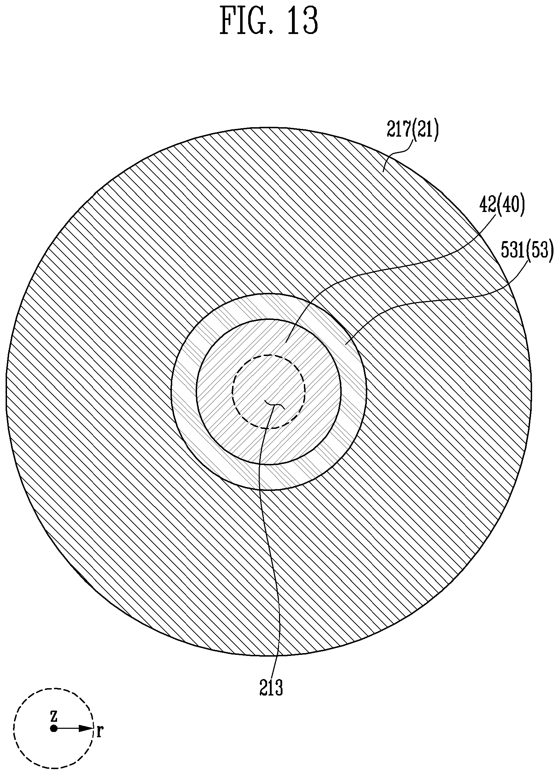

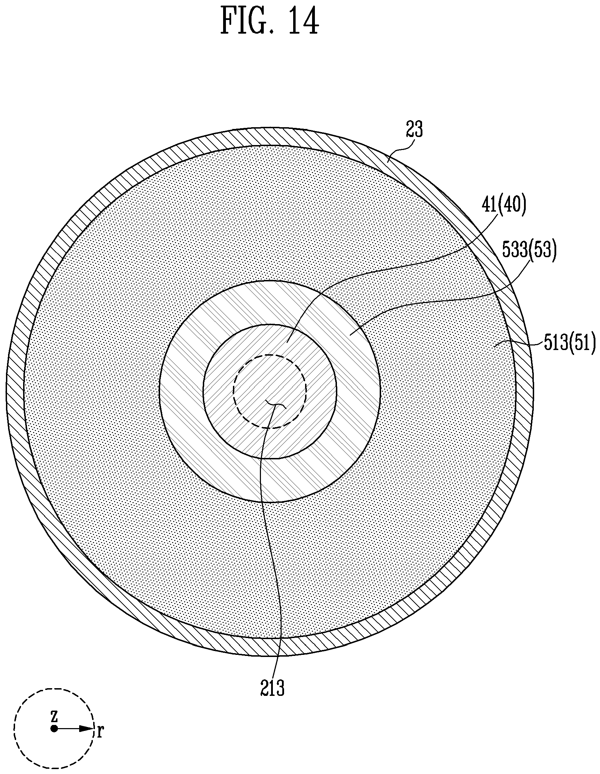

FIGS. 13 and 14 illustrate the can and the electrode terminal 40 of FIG. 12 viewed from the top and the bottom, respectively. Specifically, FIG. 13 illustrates a view from the top (Z-axis direction) of a can 20, and FIG. 14 illustrates a view from the bottom (Z-axis direction) of the can 20.

Referring to FIG. 13, an extension body portion 531 may extend in the radial direction (for example, in the R-axis direction) around a through-hole 213, and an electrode terminal 40 may also extend in the radial direction (for example, in the R-axis direction) around the through-hole 213.

The outer circumference of an extension body portion 531 may be positioned farther away from a through-hole 213 along the radial direction than the outer circumference of an electrode terminal 40. Through this, an extension body portion 531 may prevent contact between an electrode terminal 40 and an upper portion 21 of a can 20.

Even when a cover portion 51 and an extension portion 53 are formed separately, the appearance viewed from the top of a can 20 may be the same as the appearance a cover portion 51 and an extension portion 53 are formed integrally.

Meanwhile, referring to FIG. 14, a cover portion 51 may overlap with an extension support portion 533. A cover portion 51 may be extended along the radial direction around a through-hole 213, and an extension support portion 533 may also be extended along the radial direction around the through-hole 213. In addition, at least a part of an extension support portion 533 may be positioned between a first region 41 of an electrode terminal 40 and a cover portion 51. In addition, a first surface 513 of a cover portion 51 may be in contact with an extension support portion 533.

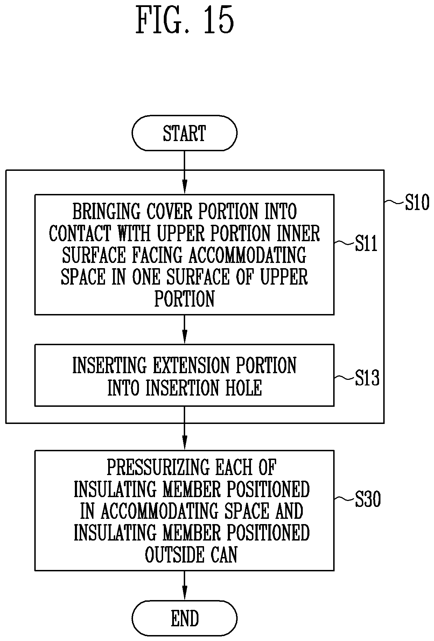

FIG. 15 shows a flowchart of a manufacturing method of a battery cell according to another embodiment of the present disclosure.

Hereinafter, a manufacturing method of a battery cell 100 according to one embodiment of the present disclosure will be described with reference to FIG. 15.

A manufacturing method of a battery cell 100 of the present disclosure includes: inserting the insulating member 50 into the through-hole 213 (S10); and pressurizing each of the insulating member 50 positioned in the accommodating space 25 and the insulating member 50 positioned outside the can 20 (S30).

In the manufacturing method of a battery cell 100 of the present disclosure, the step S10 of inserting the insulating member 50 into the through-hole 213 may first be performed. Thereafter, in the manufacturing method of a battery cell 100 of the present disclosure, the step S30 of pressurizing each of the insulating member 50 positioned in the accommodating space 25 and the insulating member 50 positioned outside the can 20 may be performed.

The step S10 of inserting the insulating member 50 may include: bringing the cover portion 51 into contact with an upper portion inner surface 215 facing the accommodating space 25 in one surface of the upper portion 21 (S11); and inserting the extension portion 53 into the insertion hole 511 (S13).

In the manufacturing method of a battery cell 100 of the present disclosure, the step S11 of bringing the cover portion 51 into contact with an upper portion inner surface 215 facing the accommodating space 25 in one surface of the upper portion 21 may first be performed. Thereafter, in the manufacturing method of a battery cell 100 of the present disclosure, the step S13 of inserting the extension portion 53 into the insertion hole 511 may be performed.

Meanwhile, in the step S13 of inserting the extension portion 53 into the insertion hole 511, at least a part of the extension portion 53 may be exposed to the outside of the through-hole 213. This is to allow the extension portion 53 to be pressurized together with an electrode terminal 40 and then be extended when the electrode terminal 40 is pressurized.

In addition, in the step S30 of pressurizing each of the insulating member 50, a part of the extension portion 53 exposed to the outside of the through-hole 213 may be extended along the radial direction around the through-hole 213. Through this, an extension portion 53 may prevent an electrode terminal 40 and an upper portion 21 of a cap from being contacted with each other.

The present disclosure may be implemented in various forms, and so the scope of the present disclosure is not limited to the above-described embodiments. The contents described above are merely examples of applying the principles of the present disclosure, and other features may be further included without departing from the scope of the present invention.

## Claims

1. A battery cell comprising:
an electrode assembly including a first electrode and a second electrode having a different polarity from the first electrode;
a can accommodating the electrode assembly in an internal accommodating space and including an upper portion having a through-hole formed therein;
an electrode terminal inserted into the through-hole and electrically connected to the first electrode; and
an insulating member including a disc-shaped cover portion covering an upper surface of the accommodating space and including an insertion hole corresponding to the through-hole, and an extension portion extending from the insertion hole toward the upper portion.

2. The battery cell of claim 1, wherein the cover portion extends along the radial direction around the insertion hole.

3. The battery cell of claim 1 or claim 2, wherein the cover portion includes a first surface facing the accommodating space and a second surface positioned on the opposite side of the first surface, and the second surface is in contact with an upper portion inner surface facing the accommodating space in one surface of the upper portion of the can.

4. The battery cell of any of claim 1 to claim 3, wherein the can further includes a side portion bent from the upper portion, and the cover portion is in contact with a side portion inner surface facing the inside of the side portion.

5. The battery cell of any of claim 1 to claim 4, wherein a part of the extension portion is exposed to the outside of the can.

6. The battery cell of any of claim 1 to claim 5, wherein the cover portion is formed integrally with the extension portion.

7. The battery cell of any of claim 1 to claim 6, wherein the insulating material is in contact with each of the electrode terminal and the upper portion, and is positioned between the electrode terminal and the upper portion to electrically insulate each other.

8. The battery cell of any of claim 1 to claim 7, wherein at least a part of the extending portion is positioned inside the through-hole, or the extending portion electrically insulates the electrode terminal from the upper portion.

9. The battery cell of any of claim 1 to claim 8, wherein the can is electrically connected to the second electrode.

10. The battery cell of any of claim 1 to claim 9, further comprising: a first electrode collector plate disposed on an upper surface of the electrode assembly and electrically connected to the first electrode, wherein the cover portion electrically insulates the first electrode collector plate and the can.

11. The battery cell of any of claim 1 to claim 10, wherein the extension portion includes an extension support portion formed in parallel with the cover portion and an extension body portion extending upward from the extension support portion, and the extension body portion is inserted into the insertion hole.

12. The battery cell of claim 11, wherein the extension support portion is positioned under the cover portion.

13. The battery cell of claim 11 or claim 12, wherein one end of the extension support portion is bent.

14. The battery cell of any of claim 1 to claim 13, wherein the electrode terminal includes a first region positioned in the accommodating space, a second region positioned outside the can, and a third region connecting the first region and the second region, and at least one region of the first region and the second region extends along the radial direction around the third region.

15. The battery cell of claim 14, wherein the first region, the second region, and the third region are each in contact with the insulating member.
